Europäisches Patentamt

European Patent Office

Office européen des brevets

(11) Publication number: **0 259 883**
**A1**

(12) **EUROPEAN PATENT APPLICATION**

(21) Application number: 87113297.3

(22) Date of filing: 11.09.87

(51) Int. Cl.⁴: **C10L 9/10** , **C10L 10/00** , **B01D 53/34**

(30) Priority: 12.09.86 JP 216695/86
18.09.86 JP 221026/86

(43) Date of publication of application:
16.03.88 Bulletin 88/11

(84) Designated Contracting States:
AT DE GB

(71) Applicant: SAKAI CHEMICAL INDUSTRY CO.,
LTD.,
1-Ebisujima 5-cho
Sakai-shi Osaka-fu(JP)

Applicant: MITSUBISHI JUKOGYO KABUSHIKI
KAISHA
5-1, Marunouchi 2-chome Chiyoda-ku
Tokyo 100(JP)

(72) Inventor: Abe, Kazunobu
Sakai Chem. Ind. Co. Ltd. 5-1, Ebisujima-cho
Sakai Osaka(JP)
Inventor: Nakatsuji, Tadao
Sakai Chem. Ind. Co. Ltd. 5-1, Ebisujima-cho
Sakai Osaka(JP)
Inventor: Nagano, Kazuhiko
Sakai Chem. Ind. Co. Ltd. 5-1, Ebisujima-cho
Sakai Osaka(JP)

(74) Representative: von Kreisler, Alek,
Dipl.-Chem. et al
Deichmannhaus am Hauptbahnhof
D-5000 Köln 1(DE)

(54) **A method of immobilizing arsenic or arsenic compounds contained in boiler slags or high temperature gases.**

(57) A method of immobilizing arsenic compounds in coal or slags in furnaces when coal-fired boilers are operated, which comprises: adding to the coal or slags compounds of alkaline earth metals, manganese, copper or zinc as immobilizers, thereby to convert the arsenic compounds into nonvolatile or only slightly volatile substances.

Further a method of immobilizing vapors of arsenic compounds contained in high temperature gases which comprises: putting the high temperature gases containing vapors of arsenic compounds therein into contact with compounds of alkaline earth metals, manganese, copper or zinc as immobilizers, thereby to convert the arsenic compunds into nonvolatile or only slightly volatile substances separable or removable from the gases.

# A Method of Immobilizing Arsenic or Arsenic Compounds Contained in Boiler Furnaces or High Temperature Gases

This invention relates to a method of immobilizing arsenic or arsenic compounds contained in coal or slags when coal-fired boilers are operated. The invention further relates to a method of immobilizing volatile arsenic or arsenic compounds contained in high temperature gases such as combustion waste gases from coal-fired boilers or waste gases from copper smelting processes.

More particularly, the invention relates to a method of converting arsenic or arsenic compounds contained in coal or slags in furnaces when coal-fired boilers are worked, to nonvolatile or only slightly volatile substances, thereby to immobilize the arsenic compounds, and thus prevent the compounds from getting mixed with the combustion waste gases discharged from the boilers. The invention further relates to a method of immobilizing volatile arseinic compounds contained in high temperature gases such as combustion waste gases from coal-fired boilers or copper smelting waste gases to nonvolatile or only slightly volatile substances that are separable or removable from the gases.

When coal-fired boilers are operated, the combustion waste gases therefrom contain nitrogen oxides in large concentrations since coal contains large amounts of nitrogen components therein. The nitrogen oxides are toxious as well known, and dry-or wet-denitrization of the combustion waste gases are carried out with many coal-fired boilers today to convert the nitrogen oxides into innoxious compounds or to remove them from the waste gases.

Various denitrizing processes are already known, however, a selective catalytic reduction process in which nitrogen oxides are reduced into nitrogen and water in the presence of a molded solid catalyst by use of ammonia as a reducing gas is said most advantageous from the standpoint of controllability of the reactions and process economy.

On the other hand, the waste gases from coal-fired boilers contain vapors of arsenic compounds derived from arsenic that is contained in coal usually in amounts of about 1-100 ppm. It has been noted very recently that denitrizing catalysts are deactivated or posioned within a short period of time by arsenic compounds when the catalysts are put into contact with such arsenic compounds.

In particular, when pulverized coal-fired wet bottom ash boilers in which the resultant slag is taken out thereof as a melt are worked, large amounts of vapors of arsenic compounds such as diarsenic trioxide or diarsenic pentoxide are generated and get mixed with the waste gases. These vapors, when being put into contact with molded solid denitrizing catalysts, intrude deep into the catalysts and deactivate them, but also obstruct the micropore structures of the catalysts, thereby preventing the waste gases from diffusing into the catalysts, to decrease remarkably the denitrizing efficiency.

Waste gases from copper smelting converters also contain the vapors of diarsenic trioxide or diarsenic pentoxide since copper sulfide used as materials contain therein arsenic usually in amounts of about 1-100 ppm. Therefore, the denitrization of copper smelting waste gases is similarly attended by the deactivation of the catalysts.

Therefore, the present inventors have made an intensive investigation to establish a method of preventing the vapors of arsenic compounds from getting mixed with combustion waste gases when coal-fired boilers, especially pulverized coal-fired boilers, are operated so that denitrizing catalysts retain a high denitrizing activity over a long period of time in the denitrization of such combustion waste gases.

As the results, the inventors have found out that arsenic compounds in coal or slags in furnaces are immobilized therein as nonvolatile or only slightly volatile compounds by adding compounds of alkaline earth metals, manganese, copper or zinc, to the coal or slags in furnaces of boilers, thereby making it possible to prevent the arsenic compounds from getting mixed with the combustion waste gases.

As an alternative, the inventors have further found out that the vapors of arsenic compounds contained in high temperature gases are likewise immobilized as nonvolatile or only slightly volatile compounds by putting the gases into contact with compounds of alkaline earth metals, manganese, copper or zinc.

It is, therefore, an object of the invention to provide a method of immobilizing arsenic compounds in coal or slags in furnaces when coal-fired boilers are operated, and thus preventing the arsenic compounds from getting mixed with combustion waste gases from coal-fired boilers.

It is a further object of the invention to provide a method of immobilizing, as nonvolatile or only slightly volatile compounds, vapors of arsenic compounds contained in high temperature gases such as combustion waste gases from coal-fired boilers or copper smelting waste gases, so that the arsenic compounds are separable or removable from the gases.

The method of the invention of immobilizing arsenic compounds in coal or slags in furnaces when coal-fired boilers are worked, comprises: adding to the coal or slags in furnaces compounds of alkaline earth metals, preferably Ba, Ca, Mg or Sr, or compounds of manganese, copper or zinc, as imobilizers, thereby converting the arsenic compounds into nonvolatile or only slightly volatile substances.

The immobilizers usable in the invention include, for example, oxides, carbonates and hydroxides of alkaline earth metals, manganese, copper or zinc. Therefore, the immobilizers usable in the invention include, for example, oxides such as calcium oxide, barium oxide, strontium oxide, magnesium oxide, magnesium oxide, copper oxide or zinc oxide; hydroxides such as calcium hydroxide, strontium hydroxide, manganese hydroxide, copper hydroxide, or zinc hydroxide; carbonates such as barium carbonate, strontium carbonate, magnesium carbonate, copper carbonate or zinc carbonate. Oxides are preferred among these compounds. These may be used alone or as mixtures of two or more. Native products mainly composed of the above compounds such as limestone mainly composed of calcium carbonate, or dolomite mainly composed of calcium carbonate and magnesium carbonate are also usuable as immobilizers in the invention.

The amount of the immobilizers added is determined depending upon the amount of arsenic compounds contained in coal used as fuels or slags generated in the furnaces, and is usually not less than about stoichiometric amounts to the arsenic compounds in the coal or slags. The immobilizers may be used in large excess amounts. By way of example, about 10-300 kg of the immobilizers are used per 1 ton of pluverized coal when pulverized coal-fired boilers are worked.

Any method may be adopted to add the immobilizers to coal or slags in furnaces. In wet bottom ash coal-fired boilers, the slags generated in the furnaces are directly taken out of the bottom of the furnaces. Dusts generated are collected in dust collectors and returned to the furnaces, and then taken out of the boilers. Therefore, the immobilizers may be added to massive coal, crushed together therewith and then supplied with boilers, or added directly to pulverized coal and supplied with boilers, or added to dusts that are returned to boilers. If the constructions of boilers permit, an opening is provided with boilers, and the immobilizers may be directly supplied with boilers through the opening.

Since the temperature in furnaces of boilers are usually about 1000-1600°C, the immobilizers added to coal or slags react with arsenic compounds contained in the coal or slags in furnaces, to convert the arsenic compounds into nonvolatile or only slightly volatile compounds. The arsenic compounds in the coal or slags are in this way immobilized therein, and therefore are prevented from getting mixed with the combustion waste gases.

As set forth above, arsenic compounds contained in coal or slags in furnaces are immobilized therein in working coal-fired boilers, so that the arsenic compounds are not get mixed with the combustion waste gases from the boilers. Therefore, the method of the invention is advantageously adopted in conjunction with, for example, catalytic denitrization of combustion waste gases from coal-fired boilers.

There is further provided according to the invention a method of immobilizing vapors of arsenic compounds contained in high temperature gases which comprises: putting the high temperature gases containing vapors of arsenic compounds therein into contact with compounds of alkaline earth metals, manganese, copper or zinc, thereby to convert the arsenic compounds into nonvolatile or only slightly substances separable or removable from the gases. The compounds used as immobilizers in this method are the same as described hereinbefore.

The high temperature gases to which the method is applicable are not specifically limited, but are exemplified by, for instance, combustion waste gases from coal-fired boilers, especially, pulverized coal-fired boilers, and waste gases from copper smelting converters, as described hereinbefore. These high temperature waste gases ae at temperatures usually of about 100-1600°C.

The immobilizers are added as fine powders of about 0.1-100 μm in particle size to high temperature gases in not less than stoichiometric amounts to arsenic compounds contained in the gases. Large excess amounts of immobilizers may be used. For example, about 10-300 kg of the immobilizers are used per 1 ton of pulverized coal when pulverized coal-fired boilers are operated.

Any method may be adopted to put high temperature gases into contact with the immobilizers. The methods as described hereibefore to add the immobilizers to coal or slags in furnaces are also usable to put the high temperature gases into contact with the immobilizers. A further method is also usable in which the immobilizers are added to combustion air for burners, and supplied with boilers together with secondary and/or tertiay air. Further, the immobilizers may be put into contact with the high temperature waste gases in a flue or gas duct that guides the waste gases to, for example, a denitrizing reactor.

Since the temperatures in furnaces of boilers are usually about 1000-1600°C as described before, the immobilizers added react there with vapors of arsenic compounds contained in gases, to convert the arsenic compounds into nonvolatile or only slightly volatile compounds.

The vapors of arsenic compounds in high temperature gases are in this way immobilized, and thus are separable or removablele from the gases. Therefore, the method of the invention is also advantageously adopted in conjunction with, for instance, catalytic denitrization of high temperature waste gases.

The invention will be more easily understood with reference to the following examples, which however are intended to illustrate the invention only and are not to be construed as limiting the scope of the invention.

EXAMPLE 1

A fly ash sample from pulverized coal-fired boilers that contained arsenic in amounts of 160 ppm was mixed with the immobilizers shown in Table 1 that had been adjusted to have a particle size of 100 mesh through but not 150 mesh through in amounts as shown in Table 1, and was placed in a crucible of magnesia.

The crucible was placed in an alumunum tube of 3 mm in inner diameter. Then nitrogen gas containing sulfur doxide in amounts of 1000 ppm was passed through the tube at a rate of 5 Nm$^3$/minute while the inside the tube was heated to about 1300°C at a rate of about 200°C/minute, and the inside the tube was maintained at the temperature for 3 hours, so that the arsenic formed nonvolatile compounds.

After standing to cool and solidfy the melt, the amounts of arsenic in the solid ash were determined, and immobilizing rates were calculated. The results are shown in Table 1. The immobilizing rates are defined as ((the amount of arsenic

## TABLE 1

| Immobilizers | Amounts of Immobilizers (parts) * | Immobilizing Rates (%) |
|---|---|---|
| BaO | 0 | 3.6 |
| | 1 | 6.5 |
| | 5 | 11.0 |
| | 10 | 10 0 |
| | 20 | 61.6 |
| | 50 | 92.6 |
| SrO | 0 | 3.8 |
| | 5 | 8.0 |
| | 10 | 7.7 |
| | 20 | 79.7 |
| | 50 | 94.3 |
| Dolomite | 0 | 5.6 |
| | 1 | 4.0 |
| | 5 | 4.0 |
| | 10 | 6.2 |
| | 20 | 84.8 |
| | 50 | 95.5 |
| $CaCO_3$ | 0 | 2.4 |
| | 1 | 3.2 |
| | 5 | 6.7 |
| | 10 | 34.8 |
| | 20 | 87.0 |
| | 50 | 97.8 |

Notes: * Parts by weight in terms of oxides in relation to 1 part by weight of fly ash.

remained in the sample)/(the initial amount of arsenic in the sample)) x 100 (%).

For comparison, the same fly ash samples were heated in the same manner as above without adding thereto the immobilizers. The immobilizing rates are shown in Table 1.

When the immobilizers were added to fly ash according to the invention, arsenic compounds in the melted ash were converted into nonvolatile or only slightly volatile compounds and remained in the ash. This is illustrated as large immobilizing rate in Table 1. However, when no immobilizer was added to the fly ash, the arsenic compounds in the ash vaporized and got mixed with the nitrogen gas and was removed from the ash, thus providing small immobilizing rates.

EXAMPLE 2

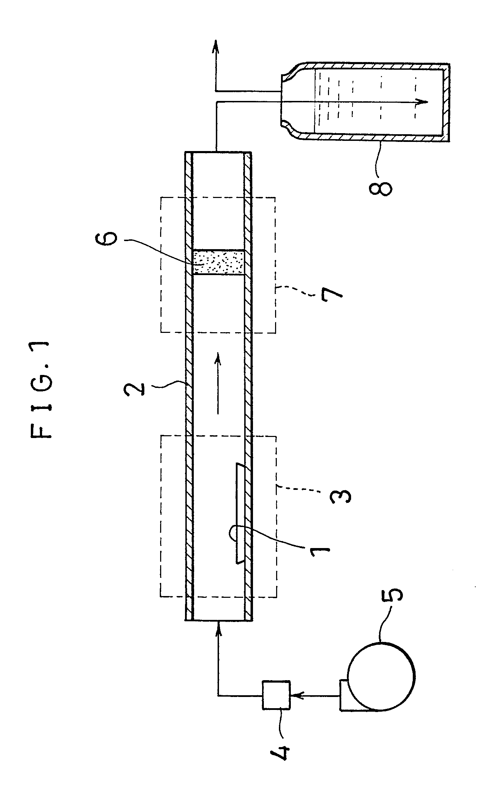

As shown in Fig. 1, 10 g of diarsenic trioxide were placed on an evaporating dish 1 in a quartz tube 2, and were then heated at 300°C with a heater 3. Compressed air was fed into the tube at a pressure of 1 kg/cm³ G at a rate of 5 lit./minute through a constant flow valve 4 with a compressor 5, thereby to generate an air containing diarsenic trioxide in amounts of about 500 ppm.

An amount of 10 g in terms of oxides of an immobilizer 6 that had been adjusted to have a particle size of 100 mesh through but-not-150-mesh-through-was filled-downstream in the tube to form a sectionally extending layer, and heated at predetermined temperatures with a heater 7. The above-mentioned air containing vapors of the arseinc compound was introduced into the layer of the immobilizer, and then the gas discharged from the tube was introduced into an absorption bulb 8 containing an 1 N aqueous solution of ammonium hydroxide, to collect therein diarsenic trioxide contained in the discharged gas.

The amount of diarsenic trioxide was determined by arsenic trioxide extraction-molybdenum blue spectrophotometric method, and immobilizing rates $\alpha = ((a-b-c)/(a-b)) \times 100$ (%) were calculated, wherein a is the initial weight of diarsenic trioxide on the evaporating dish, b is the weight of arsenic trioxide remaining on the evaporating dish after the experiment, and c is the weight of arsenic trioxide collected in the absorption bulb. The results are shown in Table 2.

TABLE 2

| Immobilizers | Immobilizing Rates (%) | | |
| --- | --- | --- | --- |
| | Temperatures (°C) | | |
| | 1000 | 1200 | 1400 |
| Calcium hydroxide | 15.1 | 88.8 | 91.0 |
| Barium carbonate | 19.4 | 97.1 | 98.0 |
| Strontium hydroxide | 19.3 | 96.4 | 96.5 |
| Magnesium hydroxide | 11.7 | 73.4 | 82.1 |
| Manganese dioxide | 9.8 | 65.4 | 71.5 |
| Cupric oxide | 10.3 | 68.9 | 72.9 |
| Zinc oxide | 3.2 | 22.9 | 26.1 |
| Dolomite | 13.1 | 78.0 | 81.0 |
| CaO·BaO *) | 18.9 | 99.6 | 99.5 |
| Titanium dioxide | 0.5 | 0.2 | 0.2 |
| Activated alumina | 0.3 | 0.1 | 0.5 |
| Feric oxide | 2.5 | 2.0 | 2.8 |

Notes: * Mixtures of calcium hydroxide and barium hydroxide in 1/1 weight ratio.

The immobilizers according to the invention had a high immobilizing rates. For comparison, the results when titanium dioxide, activated alumina and ferric oxide were used as immobilizers, respetively, but the these compounds were shown to be ineffective to immobilize arsenic compounds, also as shown in Table 2.

## Claims

1. A method of immobilizing arsenic compounds in coal or slags in furnaces when coal-fired boilers are operated, which comprises: adding to the coal or slags compounds of alkaline earth metals, manganese, copper or zinc, as immobilizers, thereby to convert the arsenic compounds into nonvolatile or only slightly volatile substances.

2. The method as claimed in claim 1, wherein the immobilizers are oxides of barium, calcium, magnesium, strontium, copper, manganese or zinc.

3. The method as claimed in claim 1, wherein the immobilizers are limestone or dolomite.

4. A method of immobilizing vapors of arsenic compounds contained in high temperature gases which comprises: putting the high temperature gases containing vapors of arsenic compounds therein into contact with compounds of alkaline earth metals, manganese, copper or zinc, as immobilizers, thereby to convert the arsenic compounds into nonvolatile or only slightly volatile compounds separable or removable from the gases.

5. The method as claimed in claim 4, wherein the immobilizers are oxides of barium, calcium, magnesium, strontium, manganese, copper or zinc.

6. The method as claimed in claim 4, wherein the immobilizers are limestone or dolomite.

# FIG. 1

0 259 883

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 040 797 (YOUNG) <br> * Claims 6-9; column 2, lines 36-60; column 4, lines 12-33 * | 1-3 | C 10 L 9/10 <br> C 10 L 10/00 <br> B 01 D 53/34 |
| A | | 4-6 | |
| X | CHEMICAL ABSTRACTS, vol. 85, 1976, page 227, abstract no. 24953u, Columbus, Ohio, US; A.N. TEREBENIN: "Study of the sorption of arsenic trioxide by iron, calcium, zinc, and tin oxides used to purify the fuming-process gases of tin production", & NAUCH. TR. TSNII OLOVYAN. PROM-STI, 1975, (3), 64-70 <br> * Whole abstract * | 4-6 | |

**TECHNICAL FIELDS SEARCHED (Int. Cl.4)**

C 10 L
B 01 D
F 23 J

The present search report has been drawn up for all claims

| Place of search | Date of completion of the search | Examiner |
|---|---|---|
| THE HAGUE | 11-12-1987 | MEERTENS J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)